# EUROPEAN PATENT APPLICATION

(11) **EP 1 215 264 A2**
(43) Date of publication of application: **19.06.2002**
(21) Application number: 01130091.0
(22) Date of filing: 18.12.2001
(51) Int. Cl.: C09K 11/02

(54) **Preparation of encapsulated electroluminescent phosphor**

(30) Priority: 18.12.2000 US 256279 P; 29.09.2001 US 968155
(71) Applicant: OSRAM SYLVANIA INC., Danvers, MA 01923 (US)
(72) Inventor: Vaddi, Butchi Reddy, Sayre, PA 18840 (US); Northrop, Shellie K., Sayre, PA 18840 (US)
(74) Representative: Grünecker, Kinkeldey, Stockmair & Schwanhäusser Anwaltssozietät

(57) **Abstract**

The half-life of coated electroluminescent phosphors is improved by annealing the coated phosphors in air for 30 minutes at 250°C.

## Description

This application claims priority from Provisional Patent Application no. 60/ , , filed 12/18/00.

### TECHNICAL FIELD

This invention relates to phosphors and more particularly to electroluminescent phosphors. Still more particularly, it relates to such phosphors having a moisture inhibiting coating thereon and it particularly relates to a process for improving the half-life of such coated phosphors.

### BACKGROUND ART

Phosphors are a known class of materials that emit electromagnetic radiation in response to stimulation by a form of energy. Generally, the emission of the phosphors is in the visible region of the spectrum. These phosphors are delineated by the form of energy to which they are susceptible, thus: cathode ray tube phosphors are stimulated to emission by impingement of electrons; photoluminescent phosphors are stimulated to emission by actinic radiation; x-ray phosphors are stimulated to emission by the impingement of x-rays; and electroluminescent (hereinafter, EL) phosphors are stimulated to emission by placement in an alternating electric field. It is the latter type of material to which this invention is directed, particularly such phosphors based on ZnS and activated with Cu and Cl. Also included are EL phosphors that are copper and manganese activated, copper activated zinc sulfide-selinide and zinc sulfide activated with copper, gold and chloride.

EL phosphors are known materials. Also known are processes to apply moisture inhibiting coatings to such phosphors, usually be means of a chemical vapor deposition process.

EL phosphors have achieved well known commercial usage in LCD back-lighting, copy machines, automotive dashboard displays, nightlights, control switch illumination, emergency lighting, watch dials, etc. Their value lies in their long life and high electrical resistance, making them very economical to operate; however, these materials, as do most phosphors, lose some of their light output over time.

It would, therefore, be an advance in the art if the lifetimes of these materials could be increased.

### DISCLOSURE OF INVENTION

It is, therefore, an object of this invention to obviate the disadvantages of the prior art.

It is another object of the invention to enhance coated EL phosphors.

These objects are accomplished, in one aspect of the invention, by a process for improving the half-life of a coated electroluminescent phosphor wherein the improvement comprises annealing the coated phosphor. The half-life of a phosphor is measured as the time it takes for the brightness of the phosphor to reach half of original 24 hour brightness.

Specifically, in a preferred embodiment, the previously coated phosphor is annealed by heating to about 250°C for about 30 minutes. While the exact mechanism that causes the improvement is not known with certainty, it is believed that the annealing may eliminate carbon content adsorbed or incorporated during the coating process. It may also eliminate any undesirable defects in the phosphor.

### BEST MODE FOR CARRYING OUT THE INVENTION

For a better understanding of the present invention, together with other and further objects, advantages and capabilities thereof, reference is made to the following disclosure and appended claims.

In a specific, preferred embodiment of the invention, a zinc sulfide EL phosphor was prepared and coated with aluminum oxide or oxyhydroxide via a chemical vapor deposition process using trimethyl aluminum as the coating agent. Such a process is described in pending U.S. application S.N. 09/177,226, filed October 22, 1998.

The coated phosphor was placed in quartz boats and fired in air for 30 minutes at 250°C.

Two batches of phosphor were annealed and subsequently made into EL lamps and tested. The first, shown in TABLE I as NE was coated using oxygen alone as the oxidizing gas while the second, shown in TABLE I as TNE, utilized the oxygen/ozone mixture epitomized in the above-mentioned pending application.

**TABLE 1**

| Sample | Anneal Temp °C | Anneal Time Minutes | 24 Hour Brightness FL | 100 Hour Brightness FL | Half-Life Hours | Color Value X | Color Value Y |
|---|---|---|---|---|---|---|---|
| NE Control | None | None | 18.3 | 17 | 4304 | 0.180 | 0.436 |
| NE 1 | 250 | 30 | 17 | 17.7 | 5067 | 0.181 | 0.440 |
| NE 2 | 250 | 30 | 17 | 17 | 4993 | 0.194 | 0.470 |
| TNE Control | None | None | 20.9 | 21 | 3354 | 0.196 | 0.469 |
| TNE 1 | 250 | 30 | 21.4 | 21.3 | 3810 | 0.196. | 0.474 |
| TNE 2 | 250 | 30 | 19.9 | 19.4 | 3779 | 0.181 | 0.440 |

These data indicate that annealing these phosphors greatly improved their half-life brightness, approximately 17% in the case of the NE phosphors and approximately 18% in the case of the TNE phosphors.

While there have been shown and described what are at present considered to be the preferred embodiments of the invention, it will be apparent to those skilled in the art that various changes and modification can be made herein without departing from the scope of the invention as defined by the appended claims.

## Claims

1. A process for improving the half-life of a coated electroluminescent phosphor wherein the improvement comprises; annealing said coated phosphor.

2. The process of Claim 1 wherein said annealing is accomplished by heating said coated phosphor at about 250°C for about 30 minutes.

3. The process of Claim 2 wherein said heating takes place in air, with said phosphor placed in quartz boats
